# EUROPEAN PATENT SPECIFICATION

(11) **EP 2 240 392 B1**
(45) Date of publication and mention of the grant of the patent: **05.09.2012**
(21) Application number: 09702582.9
(22) Date of filing: 15.01.2009
(51) Int. Cl.: B65G 21/16

(54) **RETURN GUIDE BEND SEGMENT**
RÜCKFÜHRUNGS-BIEGUNGSSEGMENT
SEGMENT COURBÉ DE GUIDE DE RETOUR

(30) Priority: 15.01.2008 NL 2001189
(43) Date of publication of application: 20.10.2010
(73) Proprietor: Rexnord Flattop Europe B.V., 2691 GV 's-Gravenzande (NL)
(72) Inventor: VAN DER ENDE, Remco, NL-2678 CA De Lier (NL); HOFLAND, Jacobus Hendrik, NL-2672 DV Naaldwijk (NL); COEN, Daniele, I-42020 Albinea (IT)
(74) Representative: Hatzmann, Martin
(86) International application number: PCT/NL2009/050014
(87) International publication number: WO 2009/091251

(56) References cited:
- EP-A- 1 364 896
- US-A- 4 643 298

## Description

The invention relates to a return guide bend segment for a chain conveyor.

As a rule, such a chain conveyor comprises a conveying track with a bearing surface over which are guided a number of tracks with modular conveyor chains running side by side. The modular conveyor chains, also called table top chains, are typically of endless design so that an upper part of the conveyor chain runs over the bearing surface and a return part of the conveyor chain is guided back via returning wheels. As a rule, the return part hangs free and is supported only locally. However, when the bearing surface of the conveying track comprises a bend, the return part of the chain tracks should also be guided around the bend. To this end, return guide bend segments can be used.

Such a return guide bend segment for a chain conveyor usually comprises a housing which defines a curved guide track for guiding and supporting one or more modular conveyor chains in a return of a chain conveyor. With the known return guide bend segment, the housing is provided with radial inner and outer walls of curved configuration, which are closed at a top by a connecting part and are open at the bottom. Adjacent the open bottom, the inner and outer walls are provided with grooves for receiving the side edges of the body part of the chain modules therein.

As such return guide bend segments are usually supplied by manufacturers of modular conveyor chains to a large number of builders of chain conveyors, they have to be available in a very large number of types. For instance, the radius of curvature, the length of the bend and the number of chain tracks to be guided in the guide track can vary. As a result, the return guide bend segments are often milled from solid plastic material on the basis of the desired design information. Optionally, the return guide bend segment can form part of a guide bend segment with a further guide track for the upper part of the conveyor. Such a bend segment is indicated by the skilled person as a bend segment with integrated return.

US 4 643 298 discloses a bend segment according to the preamble of claim 1.

A drawback of the known bend segment is that in some uses, it can cause wear on the conveying face of the conveyor chain to be guided back. In particular upon returning plastic chains in environments with abrasive material, irregular wear of the conveying face can occur at the locations where the chain modules cooperate with the guide grooves in the inner and outer walls of the housing of the return guide bend segment. Due to this irregular wear on the conveying face of the modular conveyor chain, products that are being conveyed on the conveying face may fall over. This can occur, for instance, when several chain tracks run side by side and the products are slid sideways from one conveyor chain to the other conveyor chain.

The object of the invention is a return guide bend segment with which the drawbacks mentioned are prevented while maintaining the advantages mentioned. To that end, the invention provides in a return guide bend segment for a chain conveyor, comprising a housing defining a guide track of curved configuration for guiding and supporting one or more modular conveyor chains of a return of a chain conveyor, while the housing is provided with guide segments spaced apart with free interspaces in the track direction and extending over the radial width of the guide track for cooperation with downward facing conveying faces of the modules of the conveyor chain(s) of the chain conveyor, according to claim 1.

What can be achieved by providing the return guide bend segment with guide segments spaced apart with free interspaces and extending over the radial width of the guide track, is that the downwards facing conveying face of the modules of the modular conveyor chain(s) is supported over the entire width transversely to the conveying direction, and that any pollutions can be discharged via the free interspaces between the guide segments. As a result, wear of the conveying face can be more regular, and, for that matter, be strongly reduced.

Further advantageous embodiments of the invention are represented in the subclaims. The invention will be elucidated further on the basis of a number of exemplary embodiments which are represented in the drawings. In the drawing:
Fig. 1A shows a schematic, perspective bottom view of a first embodiment of a return guide bend segment;
Fig. 1B shows a schematic front view of the return guide bend segment of Fig. 1A in which a modular conveyor chain is included;
Fig. 1C shows a schematic bottom view of the return guide bend segment of Fig. 1A;
Fig. 2A shows a schematic, perspective bottom view of a second embodiment of a return guide bend segment;
Fig. 2B shows a schematic front view of the return guide bend segment of Fig. 2A in which a modular conveyor chain is included;
Fig. 2C shows a schematic bottom view of the return guide bend segment of Fig. 2A;
Fig. 3A shows a schematic, perspective bottom view of a third embodiment of a return guide bend segment:
Fig. 3B shows a schematic front view of the return guide bend segment of Fig. 3A in which a modular conveyor chain is included;
Fig. 3C shows a schematic bottom view of the return guide bend segment of Fig. 3A;
Fig. 4A shows a schematic, perspective bottom view of a fourth embodiment of a return guide bend segment;
Fig. 4B shows a schematic front view of the return guide bend segment of Fig. 4A in which a number of modular conveyor chains are included, and
Fig. 4C shows a schematic bottom view of the return guide bend segment of Fig. 4A.

It is noted that the Figures are only schematic representations of preferred embodiments of the invention which are given as non-limitative exemplary embodiments. In the Figures, identical or corresponding parts are represented with the same reference numerals.

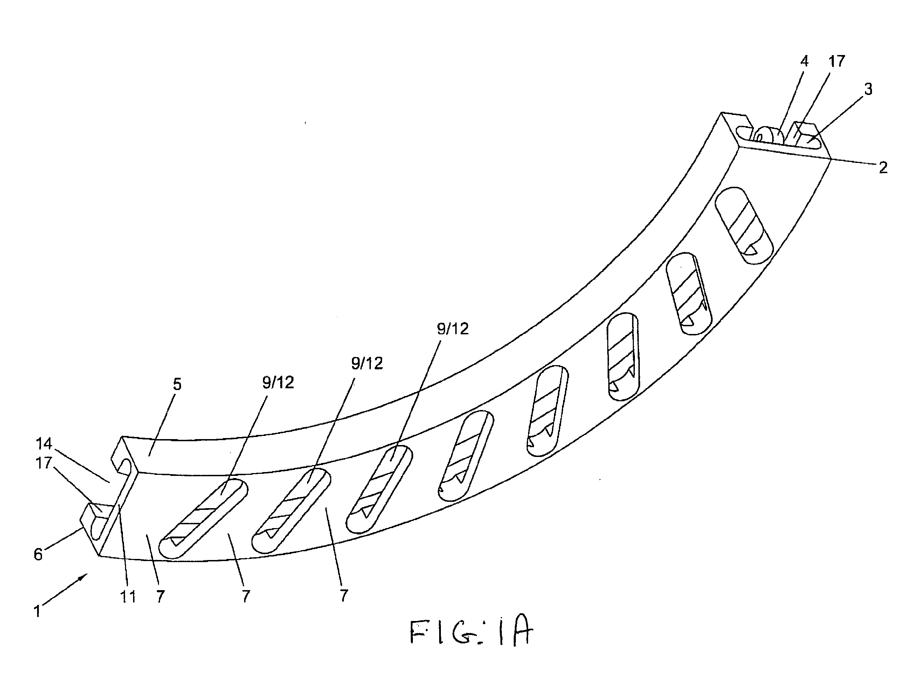

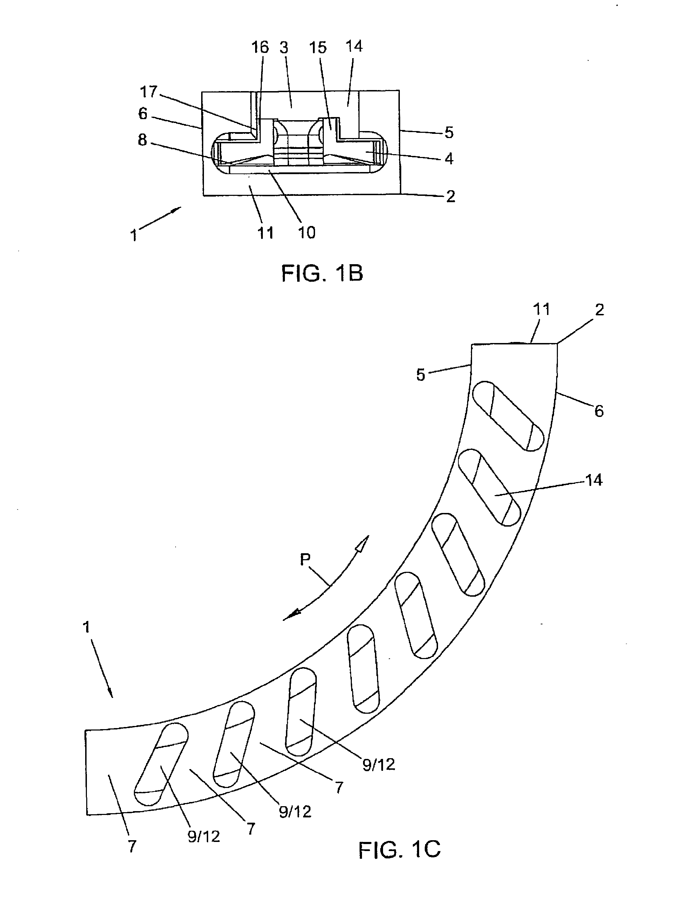

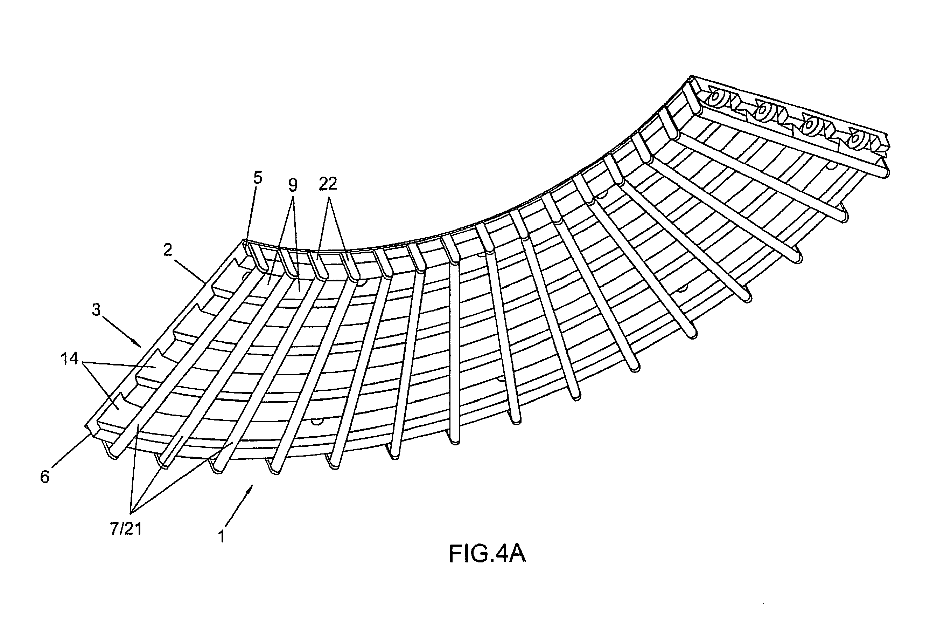

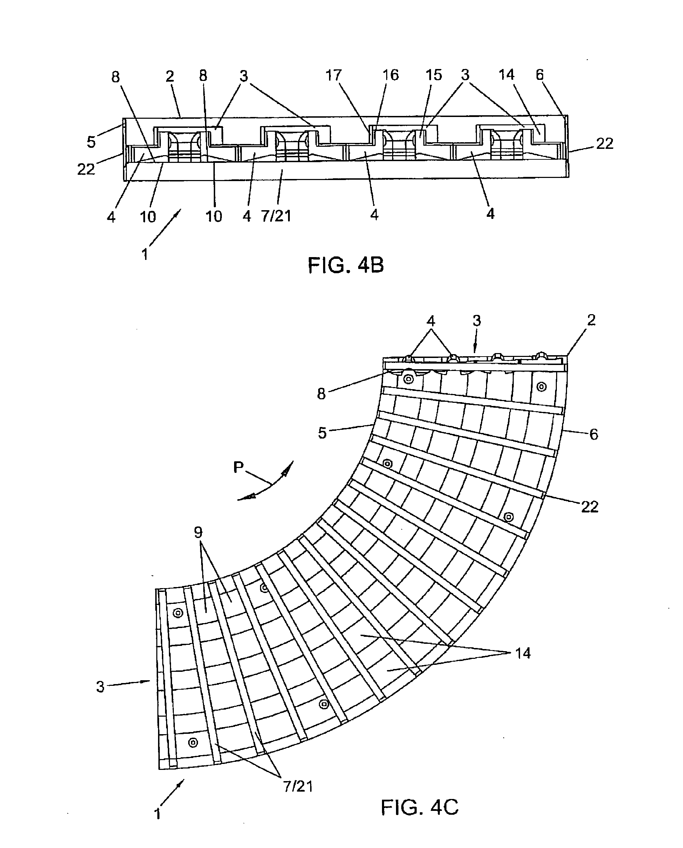

Fig. 1 shows a return guide bend segment 1 for a chain conveyor. The return guide bend segment 1 comprises a housing 2. The housing 2 defines a guide track 3 of curved configuration for guiding and supporting one or more modular conveyor chains of a return of a chain conveyor. As represented here, the housing 2 defines a single guide track 3 for guiding and supporting a return part of one modular conveyor chain 4. Optionally, in a return guide bend of a chain conveyor, several of such bend segments can be juxtaposed in radial direction. Also, several bend segments can be placed one behind the other in conveying direction. It will be clear that the housing 2 can also define several single guide tracks 3 for guiding and supporting one or more modular conveyor chains of a return of a chain conveyor. Further, the housing 2 can define a multiple guide track 3 in which the return parts of several conveyor chains 4 are jointly guided and supported, as represented in, for instance, the embodiment of Fig. 4. A combination is possible too, i.e. a number of parallel disposed return guide bends with multiple guide tracks, or a combination thereof.

The housing 2 is provided with a radial inner walls 5 of curved configuration and radial outer walls 6 of curved configuration. In Fig. 1A it is clearly visible that the guide track 3 is provided with a recess 14 for receiving the hinge parts 15 of the chain modules of the conveyor chain therein. When travelling the curved guide track, the conveyor chain 4 is guided through the bend in that sidewalls 16 of the hinge parts 15 of the chain modules cooperate with the radial outer sidewall 17 of the guide track.

The housing 2 is further provided with guide segments 7 extending over the entire radial width of the guide track 3, for cooperation with a downwards facing conveying face 8 of the return part of the modular conveyor chain 4. Here, the guide segments 7 extend between the radial inner walls 5 and the radial outer walls 6. The guide segments 7 are spaced apart with free interspaces in the track direction indicated with double arrow P. The guide segments 7 extend from the inner wall 5 as far as the outer wall 6, and proceed substantially in radial direction. The free intervals 9 are preferably designed as continuous openings which are open towards the bottom. As can be seen in Fig. 1B, the conveying face 8 of the return part of a modular conveyor chain 4 can be supported transversely to the conveying direction P over the entire width in that the guide surface 10 of the guide segments 7 extends in radial direction over the entire radial width of the guide track 3 from the inner wall 5 as far as the outer wall 6. Any pollutions can be discharged at the location of the free intervals 9. The guide surface 10 can be of substantially flat design. Optionally, the guide surface 10 can be provided with grooves.

In this exemplary embodiment, the housing 2 can for instance be manufactured by milling it from a block of plastic material. Here, the housing 2 can be of channel-shaped design with the guide surface 10 forming part of a channel bottom 11 connecting the inner walls 5 and the outer walls 6 in radial direction. The free interspaces 9 can be designed as, for instance, milled recesses 12, so that the remaining surface of the channel bottom 11 forms the guide segments 7.

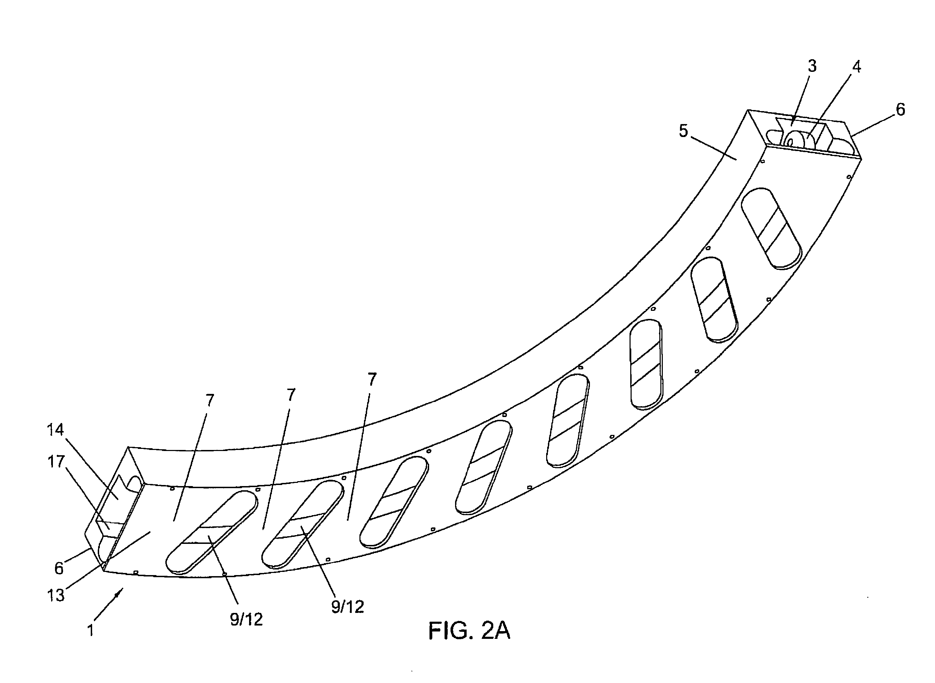

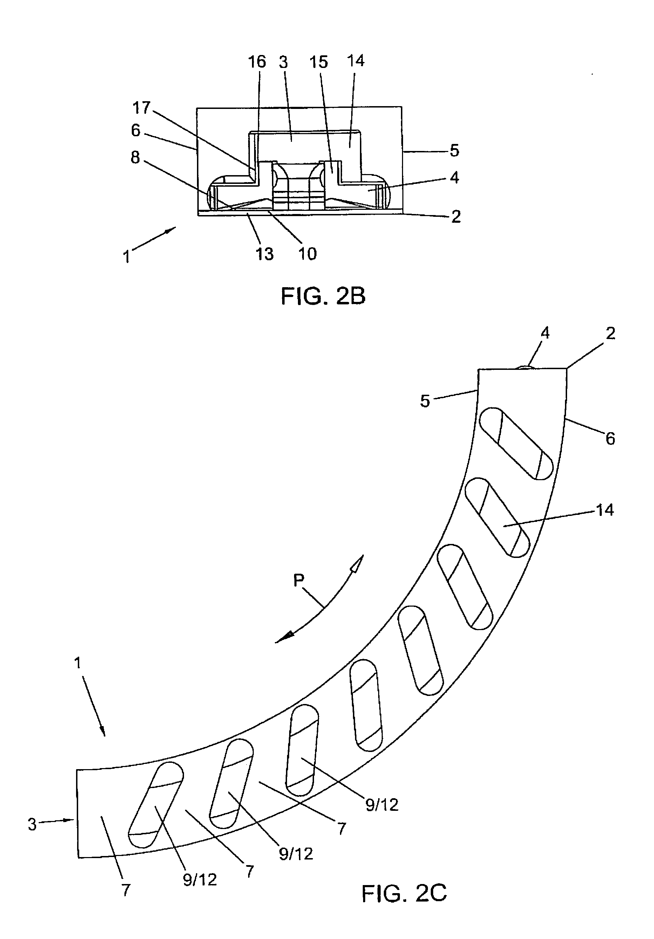

In the embodiment represented in Fig. 2, the guide segments 7 form part of a separate guide plate 13 provided with recesses 12, which plate connects the inner and outer walls 5, 6. In this exemplary embodiment, the guide plate 13 is detachably connected by means of screws to the inner and outer wall, respectively. Naturally, the guide plate 13 can also connect the inner to the outer wall 6 in a different manner, for instance in that it is received in grooves which are provided on the radial inside of the outer wall 5 and the radial outside of the inner wall 6, respectively. It is noted that in this embodiment, the guide segments 7 extend somewhat obliquely between the inner and outer walls.

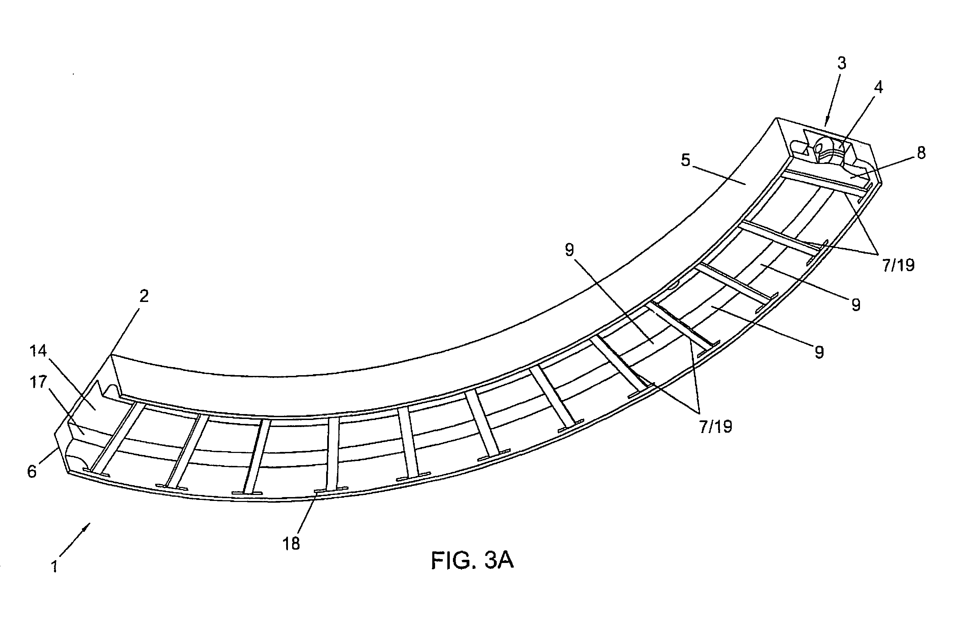

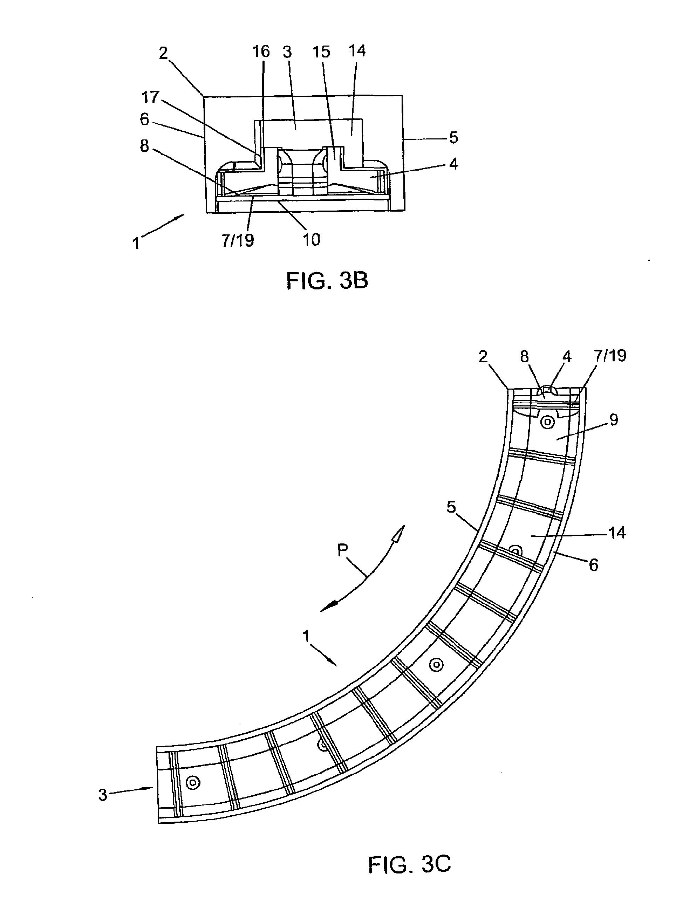

In Fig. 3, a third embodiment of the return guide bend segment 1 is shown. In this embodiment, the guide segments 7 are included between the inner walls 5 and the outer walls 6. Here, the guide segments 7 are designed as a number of separate modules. Here, the separate modules are preferably substantially identical. By designing the guide segments 7 in a modular manner, manufacturing a large number of different types of return guide bend segments can be realized in a cost-effective manner. The guide segments 7 can be detachably connected to the inner and outer walls. In this exemplary embodiment, recesses 18 are provided on the radial inside of the outer wall and the radial outside of the inner wall, respectively.

Here, the guide segments are of substantially elongated and straight design. The guide surface 10 of the guide segments 7 is substantially of curved design. Here, the guide surface 10 is curved about an axis of curvature which extends in radial direction. The guide surface 10 can for instance be (a part of) a casing surface of a cylinder, prism or cone. In an elegant manner, the guide segments 7 are substantially of thin-walled design. In the embodiment shown in Fig. 3, the guide segments 7 are substantially plate-shaped. Advantageously, the guide segments 7 are designed as guide strips 19 with a somewhat convexly curved surface. By designing the guide segment 7 in metal, good running properties are obtained with for instance plastic chain modules. Here, the convexity of the guide strips 19 ensures not only a good guide surface 10 for cooperation with the conveying face 8 of the chain modules of the chain conveyor. Owing to their convexity, the guide strips 19 can also be easily secured in a slot-shaped recess of the housing 2 of the return guide bend segment 1. Optionally, in the sidewalls 5, 6, a number of assembly slots spaced apart with predetermined interspaces can be provided as recesses 18. As a result, assembly of the guide strips 19 can be carried out in a simple and well defined manner by each time inserting, through swiveling, a guide segment 7 into opposite recesses 18. As is clearly visible in Fig. 3B, the guide segments 7 extend over the entire width of the guide track 3, so that the conveying face of the modules of the return part of the conveyor chain 4 is supported transversely to the conveying direction. It is noted that with this embodiment, there is a very large free interspace 9 between the guide strips, which is beneficial to the discharge of any pollutions.

In Fig. 4, a fourth embodiment of a return guide bend segment 1 is shown. In this embodiment, the guide segments are of tubular design. The guide segments 7 can for instance be designed as hollow pipes 21. As alternative, the guide segments 7 can also be designed from solid material, for instance as slots or shafts. The guide segments 7 can be designed from metal or a plastic having good running properties with the conveying face 8 of the modules of the modular conveyor to be guided. In this embodiment, the guide segments 7 are provided with intermediate segments 22 with which they are connected to the inner and outer walls 5, 6 of the housing. As a result, the radial inner and outer walls 5, 6 of the part of the housing 2 in which the guide groove is provided can be of less high design. This saves material and simplifies discharge of any pollutions. In this embodiment, there is a multiple guide track 3. The guide segments extend over the radial width of the guide track 3 along several conveyor chains.

It will be clear to the skilled person that the invention is not limited to the exemplary embodiments represented here, but that many variants are possible within the scope of the invention as set forth in the following claims.

## Claims

1. A return guide bend segment (1) for a chain conveyor, comprising a housing (2) which defines a guide track (3) of curved configuration for guiding and supporting one or more modular conveyor chains (4) of a return of a chain conveyor, **characterized in that** the housing (2) is provided with guide segments (7) spaced apart with free interspaces in the track direction and extending over the radial width of the guide track (3) for cooperation with downward facing conveying faces (8) of the modules of the conveyor chain(s) (4) of the chain conveyor.

2. A return guide bend segment (1) according to claim 1, wherein the guide segments (7) are of modular design.

3. A return guide bend segment (1) according to claim 1 or 2, wherein the guide segments (7) are included between radial inner and outer walls (5, 6) of the housing (2).

4. A return guide bend segment (1) according to any one of claims 1-3, wherein the guide segments (7) comprise a substantially elongated, straight guide body.

5. A return guide bend segment (1) according to any one of the preceding claims, wherein the guide track (3) is substantially of curved design.

6. A return guide bend segment (1) according to any one of the preceding claims, wherein the guide segments (7) are substantially thin-walled.

7. A return guide bend segment (1) according to any one of the preceding claims, wherein the guide segments (7) are designed as guide strips (19).

8. A return guide bend segment (1) according to any one of the preceding claims 1- 7, wherein the guide segments (7) are designed as pipes (21).

9. A return guide bend segment (1) according to any one of the preceding claims 1-5, wherein the guide segments (7) are designed as rods or shafts.

10. A return guide bend segment (1) according to claim 1, wherein the guide segments (7) form part of a guide face provided with openings.

11. A return guide bend segment (1) according to claim 10, wherein the guide face (10) is substantially flat.

12. A return guide bend segment (1) according to any one of claims 10 or 11, wherein the housing (2) is substantially of channel-shaped design, and wherein the guide face (10) forms a channel bottom (11) provided with recesses (18), which connects the radial inner and outer walls (5, 6) of the housing (2).

13. A return guide bend segment (1) according to any one of claim 10 - 12, wherein the guide face (10) comprises an arcuate, separate guide plate provided with recesses (18) which connects a radial inner wall (5) and a radial outer wall (6) of the housing (2).

14. A return guide bend segment (1) according to any one of the preceding claims, wherein the housing (2) further comprises a further guide track (3) for guiding and supporting one or more modular conveyor chains (4) of an upper part of a chain conveyor.

15. A chain conveyor, comprising a return guide bend segment (1) according to any one of the preceding claims.

## Patentansprüche

1. Rückführungs-Biegungssegment (1) für einen Kettenförderer, umfassend ein Gehäuse (2), das eine Führungsbahn (3) von kurvenförmiger Konfiguration zum Führen und Stützen von einer oder mehreren modularen Förderketten (4) einer Rückführung eines Kettenförderers definiert, **dadurch gekennzeichnet, dass** das Gehäuse (2) mit Führungssegmenten (7) versehen ist, die in einem Abstand voneinander mit freien Zwischenräumen in Bahnrichtung und über die radiale Breite der Führungsbahn (3) verlaufen, um mit abwärts gerichteten Förderflächen (8) der Module der Förderkette(n) (4) des Kettenförderers zusammenzuarbeiten.

2. Rückführungs-Biegungssegment (1) nach Anspruch 1, wobei die Führungssegmente (7) von modularer Bauweise sind.

3. Rückführungs-Bietungssegment (1) nach Anspruch 1 oder 2, wobei die Führungssegmente (7) zwischen radialen Innen- und Außenwänden (5, 6) des Gehäuses (2) eingeschlossen sind.

4. Rückführungs-Biegungssegment (1) nach einem der Ansprüche 1-3, wobei die Führungssegmente (7) einen im Wesentlichen länglichen, geraden Führungskörper umfassen.

5. Rückführungs-Biegungssegment (1) nach einem der vorhergehenden Ansprüche, wobei die Führungsbahn (3) im Wesentlichen von kurvenförmiger Bauweise ist.

6. Rückführungs-Biegungssegment (1) nach einem der vorhergehenden Ansprüche, wobei die Führungssegmente (7) im Wesentlichen dünnwandig sind.

7. Rückführungs-Biegungssegment (1) nach einem der vorhergehenden Ansprüche, wobei die Führungssegmente (7) als Führungsstreifen (19) ausgeführt sind.

8. Rückführungs-Biegungssegment (1) nach einem der vorhergehenden Ansprüche 1-7, wobei die Führungssegmente (7) als Röhren (21) ausgeführt sind.

9. Rückführungs-Biegungssegment (1) nach einem der vorhergehenden Ansprüche 1-5, wobei die Führungssegmente (7) als Stäbe oder Schäfte ausgeführt sind.

10. Rückführungs-Biegungssegment (1) nach Anspruch 1, wobei die Führungssegmente (7) einen Teil einer mit Öffnungen versehenen Führungsfläche bilden.

11. Rückführungs-Biegungssegment (1) nach Anspruch 10, wobei die Führungsfläche (10) im Wesentlichen flach ist.

12. Rückführungs-Biegungssegment (1) nach einem der Ansprüche 10 oder 11, wobei das Gehäuse (2) im Wesentlichen von kanalförmiger Bauweise ist und wobei die Führungsfläche (10) einen mit Aussparungen (18) versehenen Kanalboden bildet, der die radialen Innen- und Außenwände (5, 6) des Gehäuses (2) verbindet.

13. Rückführungs-Biegungssegment (1) nach einem der Ansprüche 10-12, wobei die Führungsfläche (10) eine mit Aussparungen (18) versehene gebogene separate Führungsplatte umfasst, welche eine radiale Innenwand (5) und eine radiale Außenwand (6) des Gehäuses (2) verbindet.

14. Rückführungs-Biegungssegment (1) nach einem der vorhergehenden Ansprüche, wobei das Gehäuse (2) ferner eine weitere Führungsbahn (3) umfasst, um eine oder mehrere modulare Förderketten (4) eines oberen Teils eines Kettenförderers zu leiten und zu stützen.

15. Kettenförderer, umfassend ein Rückführungs-Biegungssegment (1) nach einem der vorhergehenden Ansprüche.

## Revendications

1. Segment courbé de guide de retour (1) pour un convoyeur à chaîne, comprenant un boîtier (2) qui définit une voie de guidage (3) de configuration incurvée pour guider et supporter une ou plusieurs chaînes de convoyeur modulaires (4) d'un retour d'un convoyeur à chaîne, **caractérisé en ce que** le boîtier (2) est prévu avec des segments de guidage (7) espacés avec des espaces intermédiaires libres dans la direction de la voie et s'étendant sur la largeur radiale de la voie de guidage (3) pour la coopération avec des faces de transport (8) orientées vers le bas des modules de la (des) chaîne(s) de convoyeur (4) du convoyeur à chaîne.

2. Segment courbé de guide de retour (1) selon la revendication 1, dans lequel les segments de guidage (7) ont une conception modulaire.

3. Segment courbé de guide de retour (1) selon la revendication 1 ou 2, dans lequel les segments de guidage (7) sont compris entre les parois interne et externe radiales (5, 6) du boîtier (2).

4. Segment courbé de guide de retour (1) selon l'une quelconque des revendications 1 à 3, dans lequel les segments de guidage (7) comprennent un corps de guidage sensiblement droit et allongé.

5. Segment courbé de guide de retour (1) selon l'une quelconque des revendications précédentes, dans lequel la voie de guidage (3) a une conception sensiblement incurvée.

6. Segment courbé de guide de retour (1) selon l'une quelconque des revendications précédentes, dans lequel les segments de guidage (7) ont des parois sensiblement fines.

7. Segment courbé de guide de retour (1) selon l'une quelconque des revendications précédentes, dans lequel les segments de guidage (7) sont conçus comme des bandes de guidage (19).

8. Segment courbé de guide de retour (1) selon l'une quelconque des revendications 1 à 7 précédentes, dans lequel les segments de guidage (7) sont conçus comme des tuyaux (21).

9. Segment courbé de guide de retour (1) selon l'une quelconque des revendications 1 à 5 précédentes, dans lequel les segments de guidage (7) sont conçus comme des tiges ou des arbres.

10. Segment courbé de guide de retour (1) selon la revendication 1, dans lequel les segments de guidage (7) font partie d'une face de guidage dotée d'ouvertures.

11. Segment courbé de guide de retour (1) selon la revendication 10, dans lequel la face de guidage (10) est sensiblement plate.

12. Segment courbé de guide de retour (1) selon l'une quelconque des revendications 10 ou 11, dans lequel le boîtier (2) a une conception sensiblement en forme de canal, et dans lequel la face de guidage (10) forme un fond de canal (11) prévu avec des évidements (18), qui raccorde les parois interne et externe radiales (5, 6) du boîtier (2).

13. Segment courbé de guide de retour (1) selon l'une quelconque des revendications 10 à 12, dans lequel la face de guidage (10) comprend une plaque de guidage séparée arquée dotée d'évidements (18), qui raccorde une paroi interne radiale (5) et une paroi externe radiale (6) du boîtier (2).

14. Segment courbé de guide de retour (1) selon l'une quelconque des revendications précédentes, dans lequel le boîtier (2) comprend en outre une autre voie de guidage (3) pour guider et supporter une ou plusieurs chaînes de convoyeur modulaires (4) d'une partie supérieure d'un convoyeur à chaîne.

15. Convoyeur à chaîne comprenant un segment courbé de guide de retour (1) selon l'une quelconque des revendications précédentes.
